# EUROPEAN PATENT SPECIFICATION

(11) **EP 1 825 695 B1**
(45) Date of publication and mention of the grant of the patent: **21.05.2014**
(21) Application number: 05781150.7
(22) Date of filing: 25.08.2005
(51) Int. Cl.: H04W 36/26, H04W 36/38, H04W 72/10

(54) **CONTROL METHOD OF HANDOVER TRAFFIC SERVICE IN MULTI-CELL ENVIRONMENT AND CONTROL APPARATUS THEREOF**
STEUERVERFAHREN ZUM HANDOVER DES VERKEHRSDIENSTES IN EINER MEHRZELLENUMGEBUNG UND STEUERVORRICHTUNG DAFÜR
PROCEDE DE COMMANDE DE SERVICE DE TRAFIC DE TRANSFERT INTERCELLULAIRE DANS UN ENVIRONNEMENT MULTICELLULAIRE ET APPAREIL DE COMMANDE CORRESPONDANT

(30) Priority: 17.12.2004 KR 20040108255
(43) Date of publication of application: 29.08.2007
(73) Proprietor: Electronics and Telecommunications Research Institute, Daejeon 305-350 (KR)
(72) Inventor: CHOI, Sung-Gu, Daejeon-city 305-729 (KR); KIM, Soo-Chang, Daejeon-city 305-761 (KR); PARK, Soon-Gi, Daejeon-city 301-140 (KR); BAEK, Seung-Kwon, Daejeon-city 302-734 (KR); SONG, Jae-Su, Daejeon-city 305-350 (KR); SONG, Pyeong-Jung, Daejeon-city 305-762 (KR); NAM, Sang-Woo, Daejeon-city 305-755 (KR)
(74) Representative: Sieckmann, Dirk Christoph
(86) International application number: PCT/KR2005/002818
(87) International publication number: WO 2006/065019

(56) References cited:
- EP-A2- 1 458 209
- EP-A2- 1 463 364
- EP-A2- 1 475 985
- EP-A2- 1 475 985
- WO-A1-01/76162
- WO-A2-02/11485
- US-A1- 2004 196 808
- US-A1- 2004 228 304
- US-B1- 6 275 703
- US-B1- 6 400 951
- US-B1- 6 400 951

## Description

### Technical Field

The present invention relates to a control method of a handover traffic service in multi-cell environments and a controller thereof.

### Background Art

Next generation mobile communication system operates not only in a high-capacity system but also in low-capacity systems linked to each other in a multi-cell environment.

While low speed voice services have been provided conventionally, multimedia services having various characteristics are required to be provided in the next generation mobile communication system.

Since cell configurations are very complex and interference occurs between neighboring cells in the next generation mobile communication system, it is required to design the cell configuration such that the least interference may occur.

In addition, a handover caused by separately receiving signals generates unnecessary handovers in a multi-cell environment, which deteriorates performance on a system since the unnecessary handovers operate as signaling overheads.

For multimedia services having various characteristics, packet loss is not a big problem when voice information formed as packets is transmitted, but it will be greatly concerned when it comes to data services.

Data retransmission is necessary to prevent file transmission errors from the data service, but it may deteriorates data throughputs or the file transmission errors may be impossible to be recovered.

In the future, the data service will be a main stream instead of the voice service.

Also, it is required to consider various factors in order to support quality of service (QoS) in the multi-cell environment of the next generation mobile communication system.

Since handover traffic has more impact on the QoS compared to new traffic, the handover traffic is given higher priority.

While communication is conventionally performed in a single network, users may select various communication systems according to their preferences in the multi-cell environment in the future.

The US patent US 6,400,951 B1 discloses target cell selection in a handover procedure based on a mobile station specific priority cell list.

Furthermore, US patent application US 2004/0228304 A1 discloses a handover procedure based on QoS metrics considering selecting the optimum cell from a real-time application view.

The above information disclosed in this Background section is only for enhancement of understanding of the background of the invention and therefore, it may contain information that does not form the prior art that is already known in this country to a person or ordinary skill in the art.

### Disclosure of Invention

### Technical Problem

The present invention has been made in an effort to provide a control method of handover traffic services in a multi-cell environment for providing multimedia traffic service having various characteristics and a controller thereof. This is achieved by the subject-matter defined in the independent claims.

### Technical Solution

In an exemplary control method of handover traffic services in a multi-cell environment a) it is determined whether requested traffic is handover traffic, b) a priority for selecting a cell is determined when the requested traffic is determined as the handover traffic in a), and c) an optimized cell is selected among the multi-cell according to the determined priority.

At this time, a second optimized cell is selected by re-determining the priority in b) when the optimized cell is not selected in c).

An exemplary controller of handover traffic services is for managing radio stations and controlling handover between the radio stations in a mobile communication system of a multi-cell environment providing multimedia services having various characteristics, the mobile communication system comprising a mobile terminal, the radio station, and a router.

The controller includes a handover controller for determining a priority for selecting a cell when traffic is handover traffic, a handover determining unit for selecting an optimized cell among multi-cells according to the priority, and a handover processor according to traffic characteristics for performing handover according to traffic characteristics when the optimized cell is selected.

At this time, the handover controller determines the priority, according to requested traffic, by considering user preferences, status of cells having traffic, battery status and velocity of the mobile terminal, and traffic priority and emergency.

### Advantageous Effects

According to the exemplary embodiment of the present invention, the QoS is improved by preferentially performing the handover in the multi-cell environment and selecting the communication system with various characteristics according to the user preferences.

### Brief Description of the Drawings

FIG. 1 shows a configuration diagram of a mobile communication system in a multi-cell environment according to the exemplary embodiment of the present invention.
FIG. 2 shows a schematic diagram for representing the control method of the handover traffic service according to the exemplary embodiment of the present invention
FIG. 3 shows a flowchart for further specifically representing the control method of the handover traffic service shown in FIG. 2.

### Best Mode for Carrying Out the Invention

An embodiment of the present invention will hereinafter be described in detail with reference to the accompanying drawings.

In the following detailed description, only certain exemplary embodiments of the present invention have been shown and described, simply by way of illustration.

Accordingly, the drawings and description are to be regarded as illustrative in nature and not restrictive. Like reference numerals designate like elements throughout the specification.

A control method of handover traffic services in a multi-cell environment according to an exemplary embodiment of the present invention and a controller thereof will be described with reference to figures.

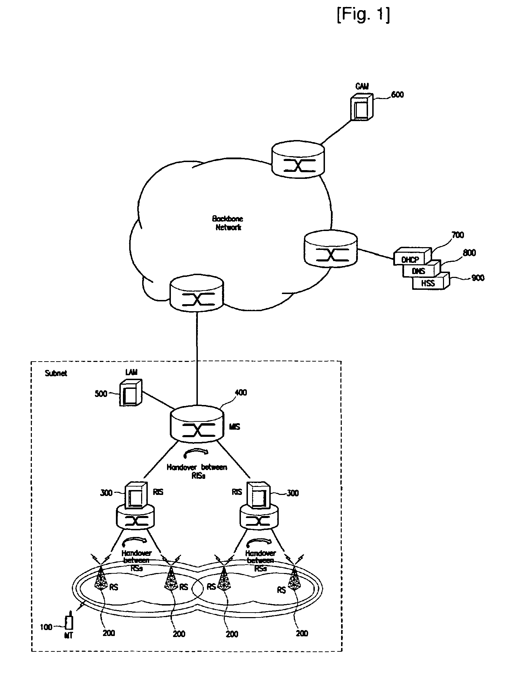

FIG. 1 shows a configuration diagram of a mobile communication system in a multi-cell environment according to the exemplary embodiment of the present invention.

In the exemplary embodiment of the present invention, a plurality of subsystems (i.e., subnets) is provided to form the mobile communication system in the multi-cell environment. As shown in FIG. 1, a subsystem in the mobile communication system in the multi-cell environment according to the exemplary embodiment of the present invention includes a mobile terminal (MT) 100, a radio station (RS) 200, a radio interface subsystem (RIS) 300, and a mobile integration system (MIS) 400, and a local access manager (LAM) 500.

The MT 100 is a terminal used for a high speed mobile multimedia (hereinafter, referred to as "HMm") service, and it processes multimedia services having various characteristics in the multi-cell environment.

The RS 200 performing signal and traffic processes transmits backward data from the MT 100 to a core network through the RIS 300 and the MIS 400, or transmits forward data from the core network to the MT 100. That is, the RS 200 establishes and releases services provided between MT 100 and the core network. In addition, the RS 200 controls the LAM 522.

The RIS 300 connects the RS 200 to the MIS 400, and manages the RS 200 in divided units of one subnet when the subnet is divided into the smaller units. At this time, the RIS 300 may not be provided when the subnet is not divided into smaller units.

The MIS 400 is a router for one subnet and connects the RIS 300 to an upper network. In cooperation with the LAM 500, the MIS 400 manages internet protocols (IP) of the MT 100 in the same subnet and guarantees mobility thereof.

The LAM 500 manages resources and status of the RS 200 and performs maintenance and repair for the RS 200 in the same subnet. When starting a system, the LAM 500 transmits information on initialization and system formation to respective subsystems through the RS 200, receives quality information from the respective subsystems, and performs various diagnoses by searching the information. That is, the LAM 500 performs authentication and encryption in such a hierarchical distribution configuration according to the exemplary embodiment of the present invention. In other words, the LAM 500 performs the authentication in most session establishments, and performs the authentication of an authentication center of the core network when a handover occurs with another system in the subnet. In the hierarchical distribution configuration, signaling overhead of a system may be reduced and a session control time may be greatly reduced.

A global access manager (GAM) 600 manages resources and status of radio stations in different subnets, and performs maintenance for the radio stations. When starting a system, the GAM 600 transmits information on subnet system initialization to respective subsystems through the MIS 400, receives quality information from the respective subsystems, and performs various diagnoses by searching the information. In addition, the GAM 600 manages IPs of the MT 100 and RS 200, guarantees mobility thereof, and performs a handover by using mobile IPs when the handover occurs between different subnet mobile integration systems MIS 400. The GAM 600 also confirms authorization and performs accounting of the MTs 100 besides performing the authentication thereof.

A dynamic host configuration protocol (DHCP) 700 dynamically generates, allocates, manages, and releases the IP.

A domain name sever (DNS) 800 converts a domain name into an address, and a home subscriber system (HSS) 900 manages subscriber profiles.

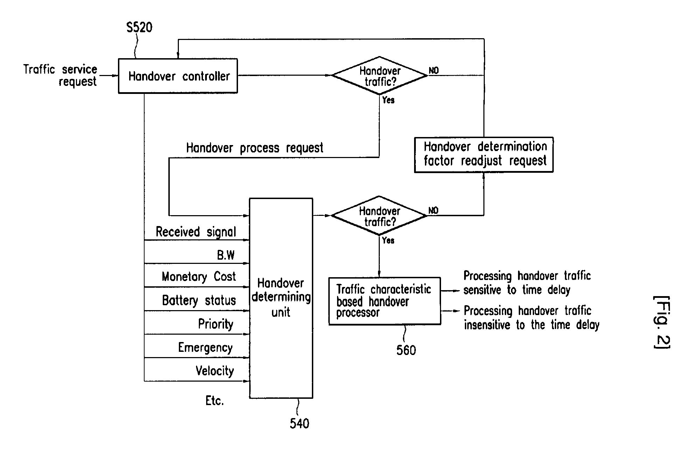

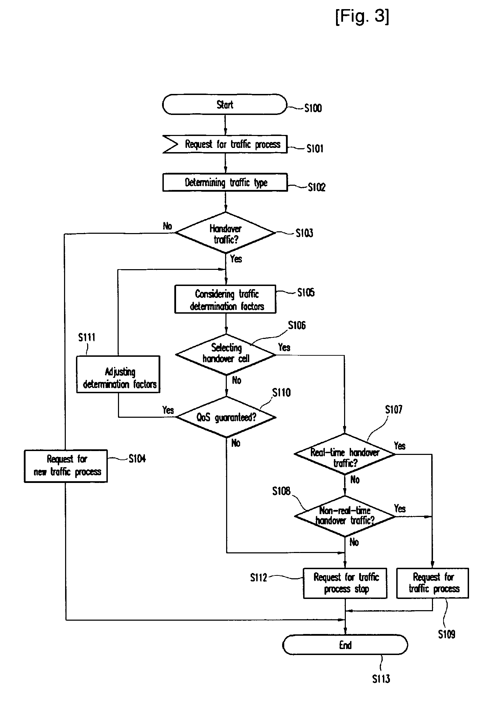

The control method of the handover traffic services in the multi-cell environment will now be described with reference to FIG. 2 and FIG. 3. Since the control method of the handover traffic services is applied between the RSs 200 in the same subnet or between the MISs 400 in different subnets, the control method to be described below will be applied to the LAM 500 and the GAM 600.

FIG. 2 shows a schematic diagram for representing the control method of the handover traffic service according to the exemplary embodiment of the present invention, and FIG. 3 shows a flowchart for further specifically representing the control method of the handover traffic service shown in FIG. 2. FIG. 2 partly and schematically shows a configuration of the LAM 500 performing a handover traffic service or the GAM 600, and hereinafter, it will be assumed that the configuration is an internal configuration of the LAM 500.

As shown in FIG. 2, the LAM 500 for controlling the handover traffic service according to the exemplary embodiment of the present invention includes a handover controller 520, a handover determining unit 540, and a traffic characteristic based handover processor 560. Parts except the above configuration shows relations between parts in the above configuration for convenience of descriptions.

The handover controller 520 determines whether a received traffic service request is for handover traffic, and requests the handover determining unit 540 to perform a handover process when the received request is for the handover traffic. The handover controller 520 determines a priority for selecting a cell supporting the QoS by considering user preferences, status of cells having traffic, velocity and battery status of mobile terminals, traffic priority and emergency, bandwidth, and momentary cost.

The handover determining unit 540 selects a most optimized neighboring cell by using cell determination factors according to the priority determined by the handover controller 520. The handover determining unit 540 requests the traffic characteristic based handover processor 560 to perform handover according to traffic characteristics when the most optimized neighboring cell is selected, and requests the handover controller 520 to find second optimized cell determination factors when the most optimized cell is not selected.

That is, the handover determining unit 540 requests the handover controller 520 to readjust the handover determination factors (i.e., priority) when the most optimized cell is not selected, and the handover controller 520 readjusts the priority to select a second optimized cell using the readjusted priority. The second optimized cell is required to be found since various communication environments are accessible in the multi-cell environment and the handover traffic seriously influences the QoS.

The traffic characteristic based handover processor 560 performs the handover by considering multimedia traffic characteristics when the optimized cell is selected by the handover determining unit 540. That is, the handover is performed by separating the multimedia traffic characteristics into real-time handover traffic, non-real-time traffic in order to guarantee the QoS for the traffic. That is, the traffic characteristic based handover processor 560 processes the handover traffic according to the respective characteristics by separating the traffic characteristics into the real-time handover traffic sensitive to time delay and the non-real-time traffic insensitive to the time delay. At this time, there are various methods for performing the handover such as mobile controlled handover (MCHO) and mobile assisted handover (MAHO), which are well know to those skilled in the art, and therefore detailed descriptions will be omitted.

The control method of the handover traffic service will be described in further detail with reference to FIG. 3.

The handover controller 520 receives a request for a traffic process, and determines whether the traffic is handover traffic or new traffic (i.e., determines traffic types) in steps S100, S101, S102, and S103. The handover controller 520 processes the new traffic according to a new traffic process rule in steps S104 and S113 when the traffic is the new traffic. However, when the traffic is the handover traffic, the handover controller 520 determines a priority for selecting a cell supporting the QoS in step S 105 by considering user preferences, status of cells having traffic, battery status and velocity of the mobile terminal, and traffic priority and emergency.

The handover determining unit 540 selects the cell for the handover traffic in step S106 according to the priority determined in step S105.

The traffic characteristic based handover processor 560 performs the handover with reference to the multimedia traffic characteristics when a most optimized cell is selected. That is, the traffic characteristic based handover processor 560 performs a real-time traffic process in steps S107 and S109 when the traffic is the handover traffic, and performs a non-real-time traffic process in steps S108 and S109 when the traffic is the non-real-time traffic.

When the most optimized cell for the handover traffic is not selected in step S 106, the handover determining unit 540 requests the handover controller 520 to readjust the priority for selecting the handover cell and select a second optimized cell in steps S 110, S111, and S105. At this time, when the handover controller 520 is requested to select the second optimized cell, the handover controller 520 re-determines the priority for selecting the cell supporting the QoS by considering the user preferences for traffic, the status of cells having traffic, the battery status and velocity of the mobile terminal, and the traffic priority and emergency. Then, steps S 107, S108, and S109 are performed when the cell is selected.

The traffic process is stopped when the QoS is not guaranteed in step S110 or the traffic is not the non-real-time handover traffic in step S108.

While this invention has been described in connection with what is presently considered to be practical exemplary embodiments, it is to be understood that the invention is not limited to the disclosed embodiments, but, on the contrary, is intended to cover various modifications.

## Claims

1. A control method of handover traffic services performed in an access manager, wherein the access manager is a local access manager (500) or a global access manager (600), in a multi-cell environment for providing multimedia traffic services having various characteristics, the control method comprising:
a) determining (S103) whether a received traffic service request is for handover traffic;
b) determining (S105) a priority for selecting a cell supporting a quality of service, QoS, when the traffic service request is determined as the handover traffic in a), wherein the priority is determined by considering user preferences for traffic, status of cells having traffic, battery status and velocity of mobile terminals, and traffic priority and emergency;
c) selecting (S106) an optimized cell among multi-cells according to the determined priority, and
performing the handover according to traffic characteristics when the optimized cell is selected in c).

2. The control method of claim 1, wherein a second optimized cell is selected by re-determining the priority in b) when the optimized cell is not selected in c).

3. The control method of claim 1, wherein the traffic characteristics are characteristics of real-time traffic or non-real-time traffic.

4. A controller of handover traffic services for managing radio stations and controlling handover between the radio stations in a mobile communication system of a multi-cell environment providing multimedia services having various characteristics, the mobile communication system comprising a mobile terminal, the radio stations, and a router, the controller comprising:
a handover controller (520) for determining a priority for selecting a cell supporting a quality of service, QoS, when the traffic is handover traffic, wherein the handover controller is adapted to determine the priority, according to requested traffic, by considering user preferences, status of cells having traffic, battery status and velocity of the mobile terminal, and traffic priority and emergency;
a handover determining unit (540) for selecting an optimized cell among multi-cells according to the priority; and
a traffic characteristic based handover processor (560) for performing handover according to the traffic characteristics when the optimized cell is selected.

5. The controller of one of claim 4, wherein the handover determining unit (540) requests the handover controller (520) to re-determine the priority and select a second optimized cell when the optimized cell is not selected.

## Patentansprüche

1. Steuerverfahren für Übergabe-Verkehrsdienste, die in einem Zugangsmanager durchgeführt werden, wobei der Zugangsmanager ein lokaler Zugangsmanager (500) oder ein globaler Zugangsmanager (600) ist, in einer Multizellen-Umgebung zum Bereitstellen von Multimedia-Verkehrsdiensten mit verschiedenen Charakteristiken, wobei das Steuerverfahren umfasst:
a) Bestimmen (S103), ob eine empfangene Verkehrsdienst-Anfrage Übergabeverkehr betrifft;
b) Bestimmen (S105) einer Priorität zur Auswahl einer Zelle, die eine Dienstqualität oder Quality of Service, QoS, unterstützt, wenn die Verkehrsdienst-Anfrage in a) als Übergabeverkehr bestimmt wird, wobei die Priorität bestimmt wird, indem Nutzerpräferenzen für Verkehr, Status von Zellen mit Verkehr, Batteriestatus und Geschwindigkeit von mobilen Terminals, und Verkehrspriorität und Notfall berücksichtigt werden;
c) Auswählen (S106) einer optimierten Zelle unter mehreren Zellen gemäß der bestimmten Priorität, und
Durchführen der Übergabe gemäß Verkehrscharakteristiken, wenn die optimierte Zelle in c) ausgewählt ist.

2. Steuerverfahren nach Anspruch 1, wobei eine zweite optimierte Zelle ausgewählt wird durch erneutes Bestimmen der Priorität in b), wenn die optimierte Zelle in c) nicht ausgewählt wird.

3. Steuerverfahren nach Anspruch 1, wobei die Verkehrscharakteristiken Charakteristiken von Echtzeitverkehr oder Nicht-Echtzeitverkehr sind.

4. Controller für Übergabe-Verkehrsdienste zum Steuern von Sendestationen und zum Steuern von Übergabe zwischen den Sendestationen in einem mobilen Kommunikationssystem einer Multizellen-Umgebung, der Multimediadienste mit verschiedenen Charakteristiken bereitstellt, wobei das mobile Kommunikationssystem ein mobiles Terminal, die Sendestationen und einen Router aufweist, wobei der Controller umfasst:
einen Übergabe-Controller (520) zum Bestimmen einer Priorität zum Auswählen einer Zelle, die eine Dienstqualität oder Quality of Service, QoS, unterstützt, wenn der Verkehr Übergabeverkehr ist, wobei der Übergabe-Controller dazu ausgelegt ist, die Priorität gemäß dem angeforderten Verkehr zu bestimmen durch Berücksichtigen von Benutzerpräferenzen, Status von Zellen mit Verkehr, Batteriestatus und Geschwindigkeit von mobilen Terminals, und Verkehrspriorität und Notfall;
eine Übergabe-Bestimmungseinheit (540) zum Auswählen einer optimierten Zelle unter mehreren Zellen entsprechend der Priorität; und
einen Übergabeprozessor (560), der auf Verkehrscharakteristiken basiert, zum Ausführen einer Übergabe gemäß den Verkehrscharakteristiken, wenn die optimierte Zelle ausgewählt ist.

5. Controller nach Anspruch 4, wobei die Übergabe-Bestimmungseinheit (540) den Übergabe-Controller (520) auffordert, die Priorität erneut zu bestimmen und eine zweite optimierte Zelle auszuwählen, wenn die optimierte Zelle nicht ausgewählt ist.

## Revendications

1. Procédé de commande de services de trafic de transfert intercellulaire dans un gestionnaire d'accès, dans lequel le gestionnaire d'accès est un gestionnaire d'accès local (500) ou un gestionnaire d'accès global (600), dans won environnement multicellulaire pour fournir des services de trafic multimédia ayant diverses caractéristiques, le procédé de commande comprenant :
a) la détermination (S103) du fait qu'une demande de service de trafic reçue est pour un trafic de transfert intercellulaire ;
b) la détermination (S105) d'une priorité pour sélectionner une cellule supportant une qualité de service, QoS, quand la demande de service de trafic est déterminée comme le trafic de transfert intercellulaire en a), dans lequel la priorité est déterminée en considérant des préférences d'utilisateur pour le trafic, l'état de cellules ayant un trafic, l'état de batterie et la vitesse de terminaux mobiles, et la priorité de trafic et l'urgence ;
c) la sélection (S106) d'une cellule optimisée parmi de multiples cellules en fonction de la priorité déterminée, et
l'exécution du transfert intercellulaire en fonction des caractéristiques de trafic quand la cellule optimisée est sélectionnée en c).

2. Procédé de commande selon la revendication 1, dans lequel une deuxième cellule optimisée est sélectionnée en déterminant à nouveau la priorité en b) quand la cellule optimisée n'est pas sélectionnée en c).

3. Procédé de commande selon la revendication 1, dans lequel les caractéristiques de trafic sont des caractéristiques de trafic en temps réel ou de trafic non en temps réel.

4. Dispositif de commande de services de trafic de transfert intercellulaire pour gérer des stations radio et commander un transfert intercellulaire entre les stations radio dans un système de communication mobile d'un environnement multicellulaire fournissant des services multimédia ayant diverses caractéristiques, le système de communication mobile comprenant un terminal mobile, les stations radio et un routeur, le dispositif de commande comprenant :
un dispositif de commande de transfert intercellulaire (520) pour déterminer une priorité pour sélectionner une cellule supportant une qualité de service, QoS, quand le trafic est un trafic de transfert intercellulaire, dans lequel le dispositif de commande de transfert intercellulaire est adapté pour déterminer la priorité en fonction d'un trafic demandé, en considérant des préférences d'utilisateur, l'état de cellules ayant un trafic, l'état de batterie et la vitesse du terminal mobile, et la priorité de trafic et l'urgence ;
une unité de détermination de transfert intercellulaire (540) pour sélectionner une cellule optimisée parmi de multiples cellules en fonction de la priorité, et
un processeur de transfert intercellulaire basé sur des caractéristiques de trafic (560) pour effectuer un transfert intercellulaire en fonction des caractéristiques de trafic quand la cellule optimisée est sélectionnée.

5. Dispositif de commande selon la revendication 4, dans lequel l'unité de détermination de transfert intercellulaire (540) demande au dispositif de commande de transfert intercellulaire (520) de déterminer à nouveau la priorité et de sélectionner une deuxième cellule optimisée quand la cellule optimisée n'est pas sélectionnée.
